# EUROPEAN PATENT SPECIFICATION

(11) **EP 3 850 965 B1**
(45) Date of publication and mention of the grant of the patent: **14.02.2024**
(21) Application number: 21158496.6
(22) Date of filing: 23.03.2018
(51) Int. Cl.: A24F 40/60, A24F 40/50, A24F 40/10

(54) **ELECTRONIC VAPOUR PROVISION DEVICE WITH VARIABLE POWER SUPPLY**
ELEKTRONISCHE DAMPFVERSORGUNGSVORRICHTUNG MIT VARIABLER STROMVERSORGUNG
DISPOSITIF DE FOURNITURE DE VAPEUR ÉLECTRONIQUE À ALIMENTATION ÉLECTRIQUE VARIABLE

(30) Priority: 06.04.2017 GB 201705550
(43) Date of publication of application: 21.07.2021
(62) Divisional of application: 18715085.9
(73) Proprietor: Nicoventures Trading Limited, London WC2R 3LA (GB)
(72) Inventor: HEPWORTH, Richard, LONDON, WC2R 3LA (GB); DICKENS, Colin, LONDON, WC2R 3LA (GB); MOLONEY, Patrick, LONDON, WC2R 3LA (GB)
(74) Representative: D Young & Co LLP

(56) References cited:
- CN-A- 105 901 773
- CN-A- 106 037 022
- US-A1- 2013 104 916
- US-A1- 2014 123 990
- US-A1- 2015 282 527

## Description

### Technical Field

The present invention relates to vapour provision devices such as electronic vapour provision devices having controls operable by a user.

### Background

Aerosol or vapour provision systems such as e-cigarettes generally comprise a reservoir of a source liquid containing a formulation, typically including nicotine, from which an aerosol is generated, such as through vaporisation or other means. Thus an aerosol source for a vapour provision system may comprise a heating element or other vapour generating component coupled to a portion of the source liquid from the reservoir. In some systems, the heating element and reservoir are comprised within a first section or component, which is connectable to a second section or component housing a battery to provide electrical power to the heating element. In use, a user inhales on the device to activate the heating element, which vaporises a small amount of the source liquid, which is thus converted to an aerosol for inhalation by the user.

Simple electronic smoking articles may provide a single on/off switch or button, providing electrical power from the battery to the heating element. The user has no control over the level at which power is supplied from the battery to the heating element. Some electronic smoking articles may offer variable power via selection of a desired power level with a dedicated control followed by operating a separate button to activate the heating element at the selected power. However, the power level must be selected in advance of the user activating the heating element, and the button then only provides a single power that is constant for the duration of the activation. In some cases, changing the power level requires resetting of the device, resulting in an unsatisfactory user experience.

In other devices, a heating profile can be selected that changes the level of power supplied to the heating element according to a sequence over an operating period of the heating element such as during a user inhalation. The heating profiles are pre-defined or require programming prior to use, and often require either external software and a device communications facility or extensive display and user interface facilities. In other devices, the airflow may be detected via a sensor placed in the air channel of the electronic smoking article and a single power level is supplied to the heater when airflow is detected. In some cases, the level of power may be automatically modified within an inhalation according to the level of airflow.

US 2014/123990 describes a real time variable voltage programmable electronic cigarette device with a multidirectional joystick for operating and programming the electronic cigarette, including the ability to create vaping profiles. The programmable function enables a user to set the voltage output and power output level applied to the atomizer when energized.

Approaches aimed at improving the operation of the power supply are of interest.

### Summary

Accordingly, the invention provides an electronic vapour provision system comprising: a vaporiser for generating vapour for inhalation by a user of the electronic vapour provision system; an electrical power supply for supplying power to the vaporiser; a user input unit for detecting a manual user actuation; and a control unit configured to control an amount of vapour generated by the vaporiser in proportion to a level of manual user actuation detected by the user input unit during vapour generation, such that an increase in actuation gives an increased amount of vapour and a decrease in actuation gives a decreased amount of vapour and such that the amount of vapour is generated according to the level of manual actuation at the time of actuation.

This and further aspects of certain embodiments are set out in the appended claims. Furthermore, the approach described herein is not restricted to specific embodiments such as set out below, but includes and contemplates any appropriate combinations of features presented herein. For example, an electronic vapour provision device or a component for an electronic vapour provision device may be provided in accordance with approaches described herein which includes any one or more of the various features described below as appropriate.

### Brief Description of the Drawings

Various embodiments will now be described in detail by way of example only with reference to the accompanying drawings in which:
Figure 1 shows a simplified schematic cross-sectional view of an example electronic cigarette or vapour provision device;
Figure 2 shows a graph of an example relationship between manual actuation and the power level to be supplied in an example embodiment.
Figure 3 shows a schematic diagram of the functional components of a variable power supply system of an example electronic cigarette.
Figure 4 shows a perspective exterior view of an example electronic cigarette;
Figure 5 shows a perspective exterior view of a further example electronic cigarette; and
Figure 6 shows a perspective exterior view of a yet further example electronic cigarette.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

As described above, the present disclosure relates to (but is not limited to) electronic aerosol or vapour provision systems, such as e-cigarettes. Throughout the following description the terms "e-cigarette" and "electronic cigarette" may sometimes be used; however, it will be appreciated these terms may be used interchangeably with aerosol (vapour) provision system or device. Similarly, "aerosol" may be used interchangeably with "vapour".

As used herein, the term "component" is used to refer to a part, section, unit, module, assembly or similar of an electronic cigarette that incorporates several smaller parts or elements, often within an exterior housing or wall. An electronic cigarette may be formed or built from one or more such components, and the components may be removably connectable to one another, or may be permanently joined together during manufacture to define the whole electronic cigarette.

According to examples herein, it is proposed to provide an electronic cigarette offering the user full scale control over the power level required by providing a user input unit on the electronic cigarette to operate the aerosol generation that allows the user to modify the power level supplied for aerosol generation on a continuous scale during an actual puff, in response to an amount by which the control or input unit is operated. The term "user input unit" is used in the following description; however, it will be appreciated that this term may be used interchangeably with "user control", "manual activation device", "manual actuation device" and other such terms. The user input unit may be, for example, a pressure sensitive button, a sprung slider or a touch sensitive ring, grid or pad.

This interactive device control allows the user to have instant control over the power level he requires by simply changing the level of actuation applied to the user control during a puff, such as by pressing harder, sliding the controller further or touching a separate area of an interface. Real time control over the amount of vapour generation is thereby afforded, and the user can vary the amount of vapour generated for inhalation over the course of a puff. This arrangement removes the need to pre-set a power level and reset the device when a change is wanted. Additionally, this offers the user in-use (puff) control over the power level, by directly varying the power during the puff.

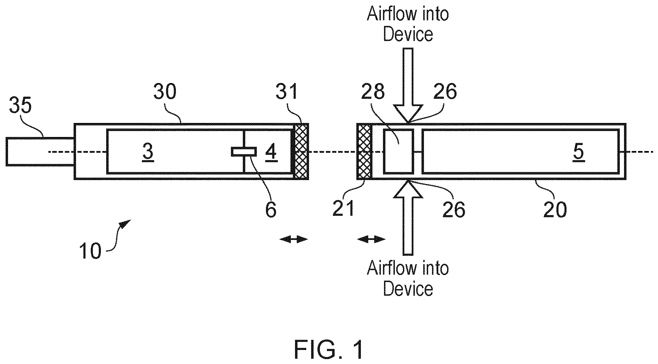

Figure 1 is a highly schematic diagram (not to scale) of an example aerosol/vapour provision system such as an e-cigarette 10. The e-cigarette 10 has a generally cylindrical shape, extending along a longitudinal axis indicated by a dashed line, and comprises two main components, namely a control or power component or section 20 and a cartridge assembly or section 30 (sometimes referred to as a cartomizer, clearomiser or atomiser) that operates as a vapour generating component.

The cartridge assembly 30 includes a reservoir 3 containing a source liquid comprising a liquid formulation from which an aerosol is to be generated, for example containing nicotine. As an example, the source liquid may comprise around 1 to 3% nicotine and 50% glycerol, with the remainder comprising roughly equal measures of water and propylene glycol, and possibly also comprising other components, such as flavourings. The reservoir 3 has the form of a storage tank, being a container or receptacle in which source liquid can be stored such that the liquid is free to move and flow within the confines of the tank. Alternatively, the reservoir 3 may contain a quantity of absorbent material such as cotton wadding or glass fibre which holds the source liquid within a porous structure. The reservoir 3 may be sealed after filling during manufacture so as to be disposable after the source liquid is consumed, or may have an inlet port or other opening through which new source liquid can be added. The cartridge assembly 30 also comprises an electrical heating element or heater 4 located externally of the reservoir tank 3 for generating the aerosol by vaporisation of the source liquid by heating. A liquid conduit arrangement such as a wick or other porous element 6 may be provided to deliver source liquid from the reservoir 3 to the heater 4. The wick 6 has one or more parts located inside the reservoir 3 so as to be able to absorb source liquid and transfer it by wicking or capillary action to other parts of the wick 6 that are in contact with the heater 4. This liquid is thereby heated and vaporised, to be replaced by new source liquid transferred to the heater 4 by the wick 3. The wick therefore extends through a wall that defines the interior volume of the reservoir tank 3, and might be thought of as a bridge or conduit between the reservoir 3 and the heater 4.

A heater and wick (or similar) combination is sometimes referred to as a vaporiser, atomiser or atomiser assembly, and the reservoir with its source liquid plus the vaporiser may be collectively referred to as an aerosol source. Various designs are possible, in which the parts may be differently arranged compared to the highly schematic representation of Figure 1. For example, the wick 6 may be an entirely separate element from the heater 4, or the heater 4 may be configured to be porous and able to perform the wicking function directly (a metallic mesh, for example). Alternatively, the liquid conduit may be formed from one or more slots, tubes or channels between the reservoir and the heater which are narrow enough to support capillary action to draw source liquid out of the reservoir and deliver it for vaporisation. Other means for vapour generation may be used in place of a heater, such as a vibrating vaporiser based on the piezoelectric effect, for example. Furthermore, the heating element may operate by ohmic heating, generating heat from the flow of current applied directly to the heating element from the e-cigarette's power supply, or it may be an inductive heater in which heat arises from the flow of eddy currents generated by application of a magnetic field, the e-cigarette comprising additional components necessary for inductive heating. In general, therefore, a vaporiser can be considered to be a vapour generating or vaporising element able to generate vapour from source liquid delivered to it, and a liquid conduit (pathway) able to deliver or transport liquid from a reservoir or similar liquid store to the vapour generator such as by a capillary force. Alternatively, the vaporiser is able to generate a vapour or aerosol by heating a solid source, for example a tobacco substrate in a so-called "heat-not-burn" device. Embodiments of the invention are applicable to all and any such configurations in which electrical power is provided to operate a vapour generating component so that the amount of vapour generation depends on the level of electrical power provided.

Returning to Figure 1, the cartridge assembly 30 also includes a mouthpiece 35 having an opening or air outlet through which a user may inhale the aerosol generated by the heater 4.

The power component 20 includes a cell or battery 5 (referred to herein after as a battery, and which may be re-chargeable) to provide power for electrical components of the e-cigarette 10, in particular the heater 4. Additionally, there is a control unit 28 comprising a printed circuit board and/or other electronics or circuitry for generally controlling the e-cigarette. The control unit connects the heater 4 to the battery 5 when vapour is required, which according to embodiments of the present disclosure is in response to a manual user actuation detected by a user input unit (not shown, but described below) operated by a user when vapour delivery is required. When the heating element 4 receives power from the battery 5, the heating element 4 vaporises source liquid delivered from the reservoir 3 by the wick 6 to generate the aerosol, and this is then inhaled by a user through the opening in the mouthpiece 35. The aerosol is carried from the aerosol source to the mouthpiece 35 along an air channel (not shown) that connects an air inlet 26 in the wall of the power component 20 to the aerosol source to the air outlet when a user inhales on the mouthpiece 35. An air flow path through the electronic cigarette is hence defined, between the air inlet(s) (which may or may not be in the power component) to the atomiser and on to the air outlet at the mouthpiece.

In this particular example, the power section 20 and the cartridge assembly 30 are separate parts detachable from one another by separation in a direction parallel to the longitudinal axis, as indicated by the solid arrows in Figure 1. The components 20, 30 are joined together when the device 10 is in use by cooperating engagement elements 21, 31 (for example, a screw or bayonet fitting) which provide mechanical and electrical connectivity between the power section 20 and the cartridge assembly 30. This is merely an example arrangement, however, and the various components may be differently distributed between the power section 20 and the cartridge assembly section 30, and other components and elements may be included. The two sections may connect together end-to-end in a longitudinal configuration as in Figure 1, or in a different configuration such as a parallel, side-by-side arrangement. The system may or may not be generally cylindrical and/or have a generally longitudinal shape. Either or both sections may be intended to be disposed of and replaced when exhausted (the reservoir is empty or the battery is flat, for example), or be intended for multiple uses enabled by actions such as refilling the reservoir and recharging the battery. Alternatively, the e-cigarette 10 may be a unitary device (disposable or refillable/rechargeable) that cannot be separated into two or more parts, in which case all components are comprised within a single body or housing. Embodiments and examples of the present invention are applicable to any of these configurations.

The example device in Figure 1 is presented in a highly schematic format to provide a high-level indication of the operation of an example electronic cigarette. No user input units or controls are shown in Figure 1, and indeed, some electronic cigarettes are not equipped with any such controls, or may include a simple on-off switch only. In present examples, however, a user input unit (user control or switch) is provided to enable the user to instantaneously modify the operation of the electronic cigarette to the user's particular requirements at any given time, and in particular during an inhalation.

The user input unit is configured to enable continuous in-use alteration of the level of electrical power provided from the battery to the heater or other vapour-generating element in the aerosol source. The level of power is delivered according to the level by which the user input unit is actuation or operated at that time, and when the amount of actuation changes, the power level is immediately or near-immediately altered accordingly. Thus the user can readily adjust the amount of vapour production as much and as often as preferred while actually using the electronic cigarette, in particular during the course of a puff (inhalation). Manual actuation of the user input unit reconfigures electrical connections (for example via a control unit such as the unit 28 in Figure 1) within the device or sends/modifies an electrical control signal to initiate supplying power at a particular level of power. When the actuation level changes, the connection or control signal changes in response to effect a corresponding change in the power level. The control unit 28 receives an input signal reflecting the level of actuation, interprets the manual actuation level and configures an appropriate response, namely a selection of a corresponding level of electrical power provided from the battery to the heater or other vapour-generating element in the aerosol source. Then, if the amount of manual actuation changes, the control unit reconfigures the response by changing the level of power supplied. The process is continuous in that the level of electrical power provided from the battery to the heater or other vapour-generating element in the aerosol source can be continuously altered according to the manual actuation of the user input unit, and also in that the level of electrical power is selected from a continuum of available power levels. The continuum may be genuinely continuous in that any power level between a maximum or minimum can be chosen, or it may be divided into a plurality of small discrete power levels for convenience of implementation. These alternatives might be thought as "analogue" and "digital" respectively but these terms do not imply any particular features for the physical implementation and operation of the device. A greater level of manual actuation delivers a higher power level, and in turn the higher power level produces an increased temperature at the heater so that the amount of vapour generated is increased, and/or vapour generation is initiated sooner at the start of a heating cycle. For a given heater, the power level can be altered by changing the voltage applied across the heater, or by changing the current passed through the heater, or both, and a particular design of electrical cigarette can be configured accordingly to implement appropriate operation of the variable power delivery. Accordingly, the user can alter the amount of vapour provided virtually instantaneously simply by changing the amount of manual actuation of the user input unit.

The user input unit may be configured to be adjustable or actuable over a continuous range, such as by gradual depression of a button, rotation of a dial or sliding of a linear slider. Alternatively, the user input unit may be configured to be placed in different positions achievable by different amounts of user actuation, each of which activates a different control signal sent to the control circuit of the electronic cigarette, and the control circuit (which may be programmable) is operable in response to modify the voltage or current supplied from the battery to the heater. During an inhalation on the electronic cigarette, the user may thereby continuously adjust and control the level of power supplied from the electrical power supply to the vaporiser by altering the level of manual user actuation applied to the user input unit.

In general, the amount of power delivered from the available continuum power range or scale is proportional to the amount of manual actuation, in that an increase in actuation gives an increased power level and a decrease in actuation reduces the power level. In other words, the power level is related to the actuation level by a monotonically increasing function. Within this general feature, the actual relationship (function, proportionality) between actuation level and power level can have any mathematical form. The relationship may be linear or non-linear, and both the actuation level and the power level can be bounded by maximum and minimum values which may be fixed or variable or subject to thresholds.

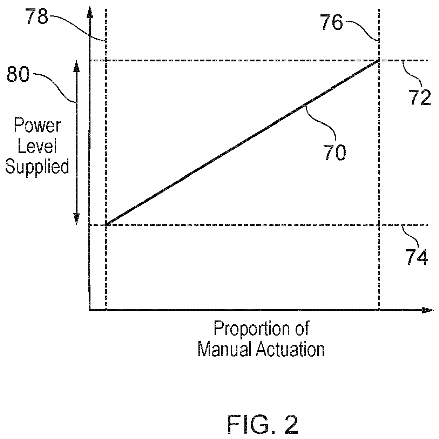

Figure 2 shows a graph of a relationship between the level of manual actuation and the power level to be supplied in an example. The power level is variable over an available continuous power level range 70, which is dependent on the relationship to the level of manual actuation, and bound by an upper power level 72 and a lower power level 74. These upper and lower power levels are assigned to and hence correspond to an upper actuation amount 76 and a lower actuation amount 78 of the user input unit. In this example, the relationship between the level of actuation and the power level supplied is linear. The maximum available power level increase 80 is the difference between the maximum 72 and minimum 74 power levels. The user input unit may be actuated between its minimum 78 and maximum 76 states, with any actuation level inbetween being a proportion of the range defined by these states. The minimum actuation state (zero operation of the user input unit) will deliver zero power, but to ensure at least some vapour generation under a condition of actuation, a minimum power level 74 sufficient for vapour production at a low level corresponds to the start of the actuation range. In other words, power delivery steps from zero to a usable minimum when actuation commences. As such, the power level supplied at any given moment may follow the formula: power supplied = maximum available power increase x proportion of manual actuation + minimum power. Dependent on the manual actuation, i.e. as a proportion between the minimum and maximum activated states, the power level supplied will be at the same proportion of the 'max power increase 80' plus the 'minimum power 74'. In some examples, levels of manual actuation beneath a threshold level do not result in power being supplied to the heater at any power level, as shown by the offset of line 78 with respect to the axis. In these examples, the offset acts to prevent accidental activation from mere handling of the device, thus maintaining safety and preserving the life of the battery.

For some other examples, the relationship or function between the level of actuation and the power level supplied may be non-linear. While in some examples the relationship can be described as a polynomial, such as a linear or quadratic relationship, in other examples the relationship may be exponential or logarithmic. Additionally, in some examples the available continuous power level range 70 comprises a discrete power level range, i.e. the available values in the power level range are discrete values. In these examples the number of discrete values can be large, with the steps between being small, such that the user is not aware the power level range is not continuous. In general, the configuration allows the user to directly control the power supplied to the vapour generating component by choosing and modifying the amount by which he actuates or operates the user input unit. A small amount of actuation gives a low level of power, and a larger amount of actuation gives a higher level of power.

In some examples, the maximum and minimum available power levels may be fixed at manufacture so as to remain constant during the lifetime of the electronic cigarette. In other examples, the user may be able to set or alter (re-set) the maximum and minimum power levels through a programming action. This might be available as a single event when the user first acquires the electronic cigarette, or may be able to be repeated according to changing preferences of the user. For example, use of a different source liquid, perhaps a new flavour or different nicotine strength, might suggest to the user that an adjustment to the available range of vapour quantity might be desirable. For convenience, ability to modify the operation in this way can be enabled by at least part of the variable power provision system being implemented in software which can be reprogrammed according to user input. A sophisticated electronic cigarette may have an onboard user interface allowing user adjustment of operating parameters. Otherwise, the electronic cigarette can be connected (wirelessly or wired, via Bluetooth or USB, for example) to an external computing device such as a mobile telephone, tablet, laptop or desktop computer into which a user can enter new maximum and minimum power levels and which communicates the new settings to the relevant part of the electronic cigarette, such as the control unit. Moreover, the user's settings and other data regarding their personal actuation-to-power relationship might be stored, remotely or in the electronic cigarette itself, as a personal profile that can be imported to other electronic cigarettes. This enables continuity across devices for the user.

A user input unit for modifying the electrical power supplied to the vapour generating element may be presented to the user directly as a power control, for example by labelling it as a power control with an indication of the relative size of the possible settings (high to low, or 1 to 10, for example), or by labelling with numerical values of obtainable voltage, current or wattage. Knowledge of the actual level of voltage, current or wattage by the user is not necessary for successful control of an electronic cigarette, but may be preferred by users of a scientific or technological bent. The option for labelling an input unit in this way is dependent on the format of the unit. Some example unit are discussed further below.

Alternatively, in the event that the vapour generating comprises a heating element, a user input unit for adjusting the electrical power might be presented to the user as a temperature controller. A given power level can produce a particular temperature or temperature range output from the heater (for example according to an algorithm, look-up table or other hardware or software relationship embodied in the device), so that altering the power and altering the temperature can in some cases be considered as equivalent, at least as regards operation of the electronic cigarette from the user's point of view. The user input unit might therefore be labelled as a temperature control and marked as adjustable between high and low settings (in steps or continuously, for example) or a simple 1 to 10 scale. Alternatively, the scale might be marked with actual temperature values or temperature ranges intended to be produced at each setting; these might indicate the heater temperature or the temperature of the inhaled aerosol.

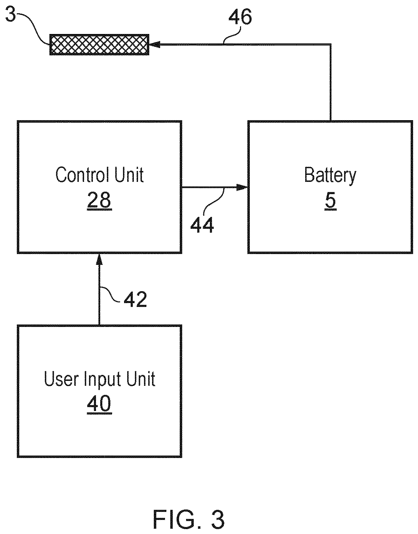

Figure 3 shows a simplified schematic diagram of functional components of an example variable power supply system for an example electronic cigarette 10, comprising a user input unit as disclosed herein. The components may be distributed between different sections of the electronic cigarette (such as the cartridge and the power section) according to design preference. A manually actuable user input unit 40 is mounted on the exterior of the electronic cigarette, and is configured to detect a level or amount of manual user actuation applied to it from a range of actuations from a minimum (or zero) level to a maximum level. In response to the user input unit detecting a manual user actuation, the user input unit sends a control signal 42 to a control unit 28. The control signal may comprise a value representing the level of manual actuation of the user input unit. The signal value may be one of a continuous range or one of a discrete range of values, dependent on the type of user input unit and its method of detection. For example, each position of a switch may make a different electrical connection such as by connecting one out of a selection of differently valued resistors. Alternatively, a rheostat may be used to provide an adjustable resistance; which offers the benefit of allowing a continuous adjustment of resistance and hence power level, rather than the stepped adjustment corresponding to a set of different resistors. Alternatively, the user input unit may detect a physical position of the switch or a location of the user's finger/hand on the switch known to correspond to a particular level of actuation, and the control signal 42 indicates this position to the control unit 28.

The control unit 28 is in communication with a battery or other electrical power supply 5. Further, the control unit 28, which may be embodied as hardware, software or a combination thereof, is provided with a predefined relationship between actuation level and power level, such as the example of Figure 2. The relationship may be provided as a formula, a look-up table, or an algorithm, for example. In response to the control unit 28 receiving an actuation level or value carried by the control signal 42 from the user input unit 40, the control unit 28 determines a required level of electrical power that corresponds to the received actuation value according to the defined relationship. The control unit then generates an output signal 44 for communication to the battery 5. The output signal 44 indicates the required level of power to be delivered by the battery 5, in accordance with the amount of detected actuation at the user input unit 40. In other words, the control unit 28 is configured to control the level of power supplied from the battery 5 to the heater 4 based on the value of signal received from the user input unit 40, which corresponds to the level of manual user actuation. In response, to receipt of the output signal 44, the battery 5 supplies the required level of electrical power 46 to the heating element 3.

For examples which utilise a threshold 78 for a minimum level of manual actuation required to activate the heating element 3, the threshold can be enforced either by the control unit 28 or by the user input unit 40. For example, the user input unit 40 may detect a manual user actuation and a control signal value may be generated as described above for any detected amount of actuation. The control unit 28 is then configured to determine whether the value surpasses the threshold value, and produces an output signal 44 or not as appropriate. Alternatively, if the actuation level does not surpass the threshold the user input unit may be configured to ascertain this situation, and not send a control signal value to the control unit 28. When the actuation exceeds the threshold, the user input unit produces a corresponding control signal for the control unit.

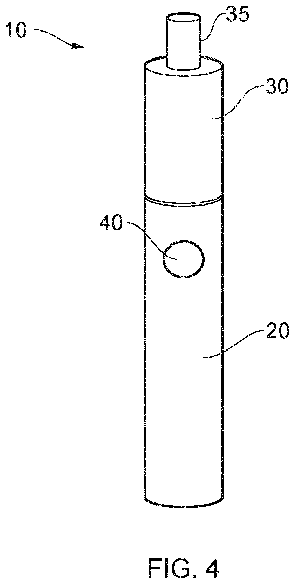

Figure 4 shows a simple perspective side view of an example electronic cigarette 10, provided with a user input unit 40 having a pressure sensitive format such as a button or pad. The button or pad is operable by a pushing, pressing or touching actuation by the user, by applying a force inwardly towards the body of the electronic cigarette, substantially perpendicular to the surface on which the button is mounted. The button or pad may be sensitive to the level of force applied against it, due to the manual user actuation. As such, the user input unit 40 may be deemed pressure-sensitive, and may further be configured to convey to the control unit 28 the level of force applied against it. During an inhalation on the electronic cigarette, the user may continuously change the force exerted upon the user input unit 40 and, as a result, control the level of power supplied from the electrical power supply to the vaporiser.

A mechanical push button may be used, and may be protected under a flexible protective membrane or skin (formed from flexible polymer, plastic, rubber or the like, for example) to give a smoother surface appearance and/or to make the control impervious to penetration by moisture or foreign matter. For a mechanical push button, the level of manual user actuation may correspond to an amount of mechanical movement of the button in the direction substantially perpendicular to the surface on which the button is mounted, i.e. the travel of the button in the direction of the applied pushing force. This may correspond to the amount of pressure applied by the user. The level of manual user actuation has two limits corresponding to the range of mechanical movement of the button, i.e. when the button is fully pressed and when it is not pressed. The physical movement of the button in response to pressure is apparent to the user.

For a pressure pad, the amount of applied pressure can be directly detected by the input unit, and the level of manual user actuation corresponds to the amount of pressure applied, within a range to which the pressure pad is sensitive. The pressure pad is sensitive to pressure in the direction substantially perpendicular to the surface on which the pad is mounted. The limits of the sensitivity will place a threshold on the 'lightness' of a press that will trigger the minimal response and also the maximum 'heaviness' of a press, such that only a maximum value and no more is triggered regardless of any pressure applied beyond a maximal threshold value. The upper and lower limits may be constant across many models of device, for any market, or might be varied having regard to the target demographic or intended geographical market for a device model. Also, the thresholds might be preset at manufacture, or may be modifiable by the user. Any format of pressure-sensitive button may be employed.

The operational condition selected by actuation of a button according to the amount of applied pressure can be hard for the user to determine, since the button does not have an easily visible range of movement to which a scale or other markings can be applied. Hence, for a user control with a button format, it may be desirable to provide a display on the electronic cigarette housing which can present to the user an indication of the value of power/temperature selected by actuation of the control, or the level of pushing/pressure. The display may also show other operating parameters of the electronic cigarette, for example predicted battery life and source liquid level. The display may take the form of a screen (liquid crystal display, or full colour pixel display, for example) for displaying numerical values for each parameter, or may comprise one or more lights (comprising light emitting diodes, for example) which are illuminated corresponding to the various parameter values, for example.

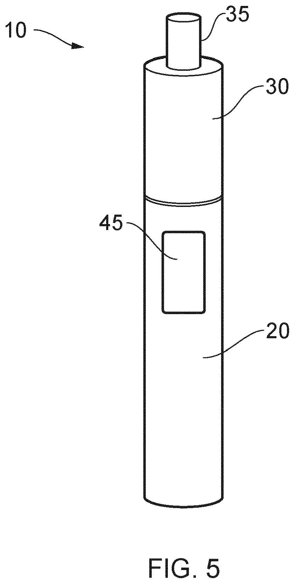

Figure 5 shows a simple perspective side view of another example electronic cigarette 10, provided with a user input unit 45 comprising a touchpad. By "touchpad", it is meant that the input unit comprises a touch-sensitive detection region or interface on the surface of the electronic cigarette which is able to detect a user's touch, possibly regardless of the level of pressure applied, and determine the location within the detection region which is being touched or has been touched, and/or determine any movement of the touch location as a user slides a finger over the region, relative to an edge or edges of the region or relative to a starting touch location. The touchpad may be operable to determine touch by capacitive or resistive technology, for example. In this case, the pushing or pressing actuation can be minimal, requiring only a contact touch by the user. Instead, the level of power for the vapour generator can be selected using a touch-sensitive pad, for some examples, according to the position of the particular touch on the touch-sensitive pad where different positions are mapped to correspond to a different power levels. The touch-sensitive region may have an associated visual scale indicating power level or actuation level for each location, and these two elements may be embodied in a single touch-sensitive screen. The user input unit 45 may further or instead be able to detect a manual user actuation comprising sliding. That is, after detecting a first manual user actuation comprising a touch at a first location, it is then able to detect subsequent manual user actuations towards a neighbouring location by a sliding or swiping actuation by the user. Thus, in response to detecting a sliding actuation the device can adjust the power level. The distance of the sliding action, either from the start point or from a designated location on the touchpad such as an edge or side of the pad, may be used to designate the level of actuation, and/or a speed of the sliding action may be used. A set of lights or a display or a written or other graphical scale may be provided to indicate the level of actuation/level of power. In the example of Figure 4, the touch sensitive pad is a linear strip of a certain width which is shaded with different colours or tones along its length. For example, one end may be red, one end may be blue, and the intermediate portion may shade from red to blue. A user, therefore, may interpret 'red' positions on the pad as being higher power and 'blue' positions as being lower power. For a linear strip touch pad, different positions along the length of the pad can correspond to different power levels, and may be accessed by a separate touch at a selection location or by sliding from one to another. An advantage of a touch pad is that widely separated power levels can be accessed directly from one another by moving a large distance between two touches. This is in contrast to a push button where it is necessary to travel through intermediate levels to reach a new level.

An alternative approach utilising a capacitive touch sensor is to require an increasing manual pressure from the user onto the touchpad, as for a press button. As the pressure increases, the area of the user's digit in contact with the touchpad will also increase, giving an increased capacitance and therefore an increased output signal from the sensor.

In an arrangement such as this, where there is no obvious physical movement detectable by the user (in contrast to a sliding motion over a touch pad, or the sliding or pushing of a mechanical input unit), it may be useful to add functionality to provide positive feedback to the user indicating the level of manual actuation and hence the level of power. For example, the input unit may be linked to a feedback arrangement to provide haptic, visual or audio feedback to the user to indicates the current power level or level of actuation. This can prevent the user over-actuating the user input unit.

There are many alternatives geometry formats to the linear strip of Figure 4. The touch-sensitive pad could be shaped as a touch-sensitive ring or circle so that movement of the touch location clockwise or anticlockwise around the ring produces in a change in the supplied power. Additionally, instead of a full ring, the touch-sensitive pad may form a half circle, quarter circle, or indeed may be any substantially curved strip, wherein one end may be associated with a maximum power and the other end may be associated with a minimal power. The curvature may lie in a plane substantially parallel to a surface of the electronic cigarette, and in other examples a full or partial ring might extend around the circumference or perimeter of an electronic cigarette having a longitudinal format. In some examples, the physical limits of the strip define the limits of the level of manual user actuation such that the possible positions of user actuation have set values associated with them, corresponding to particular values between the maximum and minimum possible values dependent on absolute position on the strip. For a touch pad shaped to allow a complete circular movement, an arbitrary location may be chosen to mark the end and beginning of the strip, corresponding to the maximum and minimum actuations. For example, a ring or circle may be split into a strip by an artificial line from the centre of the ring to a position on the circumference.

In an example, the user input unit 45 detects a first instance of manual user actuation at a first location on the touch sensitive interface and sends a signal to the control unit 28 to supply power at a default power level. The user input unit detects subsequent manual user actuation as sliding actuations and sends a signal to the control unit 28 proportional to the displacement of the end position of the manual user actuation from the first location. The power associated with each possible position of user actuation is relative and depends on the position of the initial user actuation and the directions of greater and lesser power.

A touch-sensitive user input unit may be more vulnerable to accidental actuation than push buttons, so it may be preferred to locate such controls on a part of the surface of the electronic cigarette which is less likely to be touched during regular handling, or to provide a cover over the unit, or to provide some form of lock that must be operated to place the unit in an actuable state or a state in which actuation can be detected.

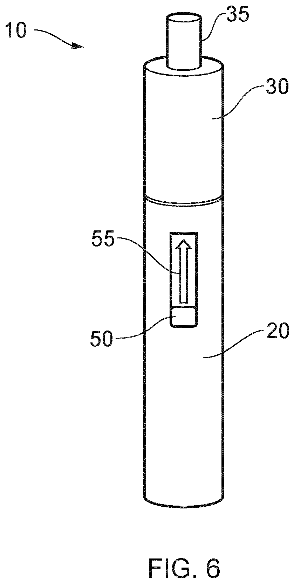

Figure 6 shows a schematic side view of a further example electronic cigarette 10 having a user input unit configured as a mechanical slider or sliding switch 50. Hence, user actuation comprising a sliding motion is required to adjust the user input unit, where sliding comprises pushing or pulling a slider within a plane substantially parallel to the surface on which the user input unit is mounted. The distance of the slider from a rest position at one end of the slider's range indicates the level of actuation. The slider comprises a handle, knob or similar graspable protrusion 50 which is movable by sliding along a slot 55 in the housing of the electronic cigarette. The slot 55 confines the movement of the slider 50, and, hence, the level of manual user actuation is determined by the position of the slider 50 within the slot 55. Movement of the slider 50(indicated by the arrow) to different positions along the slot 55, corresponding to different distances from rest may, for example, either bring the slider 50 into positions that make different electrical connections or trigger different electrical signals for adjustment of an electrical control. The slider 50 may be spring-loaded wherein a spring or other biasing means provides a return force against which the user has to push to actuate the input unit and hence activate the vapour provision device, and which returns the slider to an initial (rest) position, i.e. the position prior to user actuation when the actuating force from the user is removed. This will access a zero power level corresponding to the rest position to turn the vaporiser off. Alternatively the user may have to return the slider to the off position manually. During an inhalation of the electronic cigarette, the user may continuously change the position of the slider 55 and, as a result, control the level of power supplied from the electrical power supply to the vaporiser. The spring (or other biasing means) of the slider may further act as an indicator to the user as to the current level of manual actuation, given that the restorative force will increase as the slider 50 moves further from its initial position. The spring therefore provides tactile feedback indicating the actuation level. This effect is somewhat similarly to an increased pressure that may be applied in examples involving a button 40, for higher actuation levels. Sliding controls may operate within a straight slot as in the Figure 5 example, or the slot may be curved or have some nonlinear shape. Slider movement may be around the perimeter of the electronic cigarette, or along a length direction as illustrated, for example.

The various user input units described above have been presented as both an "on" switch by which a user initiates vapour generation from a electronic cigarette which is in an "off" or "sleep" mode, and an interactive "in-puff" power control providing on-the-fly adjustment of power provided to the vapour generator. However, the disclosure is not limited in this regard. In alternative examples, an electronic cigarette may comprise an activation switch or unit which, when operated, begins the vapour generation process by starting the provision of electrical power to the vaporiser, and a separate user input unit to provide the variable power control functionality described above. The activation unit and the user input unit may be physically separate elements operated by the user in the same or different ways, or may comprise a single element able to receive distinct input actions from the user for activation and subsequent actuation. For example, a single touch sensitive interface may initiate power supply in response an initial touch from the user, and then operate the variable power control in response to a sliding action over the interface surface by the user, or in response to a subsequent increasing or decreasing pressure on the already-touched surface. An on-off switch or button (which might be a simple mechanical unit, or an electronic interface such as a biometric sensor for reading a user's fingerprint) for initial activation and subsequent deactivation may be provided in combination with a separate or combined variable user input unit according to the various example already described. Also, the activation unit need not be configured for manual operation. Instead, the electronic cigarette may include a "puff detector" such as an airflow sensor or an air pressure sensor or detector, being a sensor able to detect a user inhalation on the electronic cigarette. In response to a detected inhalation, electrical power supply to the vaporiser can be initiated, and then subsequently varied during the puff by use of a user input unit. At the end of an inhalation (or when the airflow or air pressure level drops below a threshold indicating that the end of an inhalation is approaching), the sensor detects the ceased or reduced airflow and stops electrical power supply to the vaporiser. This can be independent of any continued actuation of the user input unit, to ensure that vapour generation is ended when the puff ends. This improves safety, and conserves source liquid.

The present disclosure is not limited to the formats and configurations of user input unit described thus far. Other types of user input unit structured to allow user adjustment across a range of levels by manual actuation may alternatively be used. Other examples include dials, wheels and levers, each of which may comprise restorative mechanisms (return spring or biasing means) of some sort. Dials, wheels, levers, mechanical sliders, touch pads and other input units that allow actuating movement substantially over a surface plane of a vapour provision device (as opposed to a push button in which actuation has a direction perpendicular to the surface plane) have a readily visible range of movement and can hence conveniently be provided with a scale or other markings to indicate current and selectable power levels to the user.

A user input unit may be included as part of an aerosol producing component (reusable or disposable) for detachable coupling to a battery section to form an electronic cigarette or other vapour provision device (electronic or non-electronic), or may be included as part of a battery section (reusable or disposable) for detachable coupling to an aerosol producing component (variously known by terms including cartomiser and cartridge), or may be incorporated directly into an electronic cigarette or other vapour provision device (electronic or non-electronic) that does not comprise detachable or separable components.

Additionally or alternatively to the dynamic power level control by which power can be altered during a puff, the user input unit can be configured so that actuation of the unit initiates a previously programmed or preset power supply operation (which might be constant power supply over the puff duration, or a varying power level over the puff duration). For example, a range of actuation inputs can be matched to variable power supply as described above, plus an additional distinct actuation input, such as a single rapid push or touch, or a double touch within a certain time period, or a rapid slide motion, can be matched to access a preset power supply mode. The user can thereby choose between dynamic or static power supply. The preset mode might be set at manufacture, or be set by the user for future access.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations; rather, the scope of the invention is determined by the claims

## Claims

1. An electronic vapour provision system (10) comprising:
a vaporiser (4, 6) for generating vapour for inhalation by a user of the electronic vapour provision system;
an electrical power supply (5) for supplying power to the vaporiser;
a user input unit (40) for detecting a manual user actuation; and
**characterised by**:
a control unit (28) configured to control an amount of vapour generated by the vaporiser in proportion to a level of manual user actuation detected by the user input unit during vapour generation, such that an increase in actuation gives an increased amount of vapour and a decrease in actuation gives a decreased amount of vapour and such that the amount of vapour is generated according to the level of manual actuation at the time of actuation.

2. An electronic vapour provision system according to claim 1, in which the manual user actuation comprises pressing, and the user input unit comprises a mechanical button (40) or a pressure-sensitive button (40).

3. An electronic vapour provision system according to claim 1, in which the manual user actuation comprises touching, and the user input unit comprises a touch sensitive interface (45).

4. An electronic vapour provision system according to claim 3, in which the touch sensitive interface is formatted as a linear strip, a curved strip, a substantially flat ring, or a strip extending partly or substantially around the perimeter of the system.

5. An electronic vapour provision system according to claim 3 or 4, in which the amount of vapour is selected according to a location of the manual user actuation on the touch sensitive interface.

6. An electronic vapour provision system according to claim 3 or 4, in which the user input unit is configured to:
detect a first instance of manual user actuation at a first location on the touch sensitive interface to cause generation of vapour at a first amount; and
subsequently detect a deviation of the manual user actuation from the first location to cause generation of vapour at an amount proportional to the displacement of a location of the latter manual user actuation from the first location.

7. An electronic vapour provision system according to claim 1, in which the manual user actuation comprises sliding, and the user input unit comprises a sliding switch (50).

8. An electronic vapour provision system according to claim 7, in which the sliding switch comprises a biasing element configured to bias its position towards a position corresponding to a zero amount of vapour generation.

9. An electronic vapour provision system according to claim 2, in which the system further comprises a display configured to present to the user an indication of the amount of vapour generated in proportion to a current actuation of the user input unit.

10. An electronic vapour provision system according to any preceding claim, in which the amount of vapour is generated in proportion to the level of manual user actuation according to a monotonically increasing function, the monotonically increasing function comprising one of a linear function, a quadratic function, a polynomial function, a logarithmic function, and an exponential function.

11. An electronic vapour provision system according to any preceding claim, in which the control unit is further configured to prevent generation of vapour when the level of manual user actuation detected by the user input unit is below a threshold value (78).

12. An electronic vapour provision system according to any preceding claim, and comprising an activation unit configured to detect an input and in response initiate the supply of power to the vaporiser prior to control of the amount of vapour generated by the control unit.

13. An electronic vapour provision system according to claim 12, in which the activation unit is configured to detect a manual input.

14. An electronic vapour provision system according to claim 12, in which the activation unit is configured to detect a user inhalation.

15. An electronic vapour provision system according to any one of claims 1 to 14, in which the vaporiser is configured to generate vapour from a liquid.

## Patentansprüche

1. Elektronisches Dampfbereitstellungssystem (10), umfassend:
einen Verdampfer (4, 6) zum Erzeugen von Dampf zur Inhalation durch einen Benutzer des elektronischen Dampfbereitstellungssystems;
eine Stromversorgung (5) zur Versorgung des Verdampfers mit Strom;
eine Benutzereingabeeinheit (40) zum Erkennen einer manuellen Benutzerbetätigung; und
**gekennzeichnet durch**:
eine Steuereinheit (28), die dazu ausgestaltet ist, eine durch den Verdampfer erzeugte Dampfmenge proportional zu einem Grad an manueller Benutzerbetätigung zu steuern, die durch die Benutzereingabeeinheit während der Dampferzeugung erkannt wird, sodass eine Zunahme der Betätigung eine erhöhte Dampfmenge und eine Abnahme der Betätigung eine verringerte Dampfmenge ergibt und sodass die Dampfmenge gemäß dem Grad an manueller Betätigung zum Zeitpunkt der Betätigung erzeugt wird.

2. Elektronisches Dampfbereitstellungssystem gemäß Anspruch 1, wobei die manuelle Benutzerbetätigung Drücken umfasst und die Benutzereingabeeinheit eine mechanische Taste (40) oder eine druckempfindliche Taste (40) umfasst.

3. Elektronisches Dampfbereitstellungssystem gemäß Anspruch 1, wobei die manuelle Benutzerbetätigung Berühren umfasst und die Benutzereingabeeinheit eine berührungsempfindliche Oberfläche (45) umfasst.

4. Elektronisches Dampfbereitstellungssystem gemäß Anspruch 3, wobei die berührungsempfindliche Oberfläche als ein linearer Streifen, ein gebogener Streifen, ein im Wesentlichen flacher Ring oder ein Streifen, der sich teilweise oder im Wesentlichen um den Umfang des Systems erstreckt, formatiert ist.

5. Elektronisches Dampfbereitstellungssystem gemäß Anspruch 3 oder 4, wobei die Dampfmenge gemäß einer Stelle der manuellen Benutzerbetätigung auf der berührungsempfindlichen Oberfläche ausgewählt wird.

6. Elektronisches Dampfbereitstellungssystem gemäß Anspruch 3 oder 4, wobei die Benutzereingabeeinheit dazu ausgestaltet ist:
eine erste manuelle Benutzerbetätigung an einer ersten Stelle auf der berührungsempfindlichen Oberfläche zu erkennen, um die Erzeugung von Dampf in einer ersten Menge zu bewirken; und
anschließend eine Abweichung der manuellen Benutzerbetätigung von der ersten Stelle zu erkennen, um die Erzeugung von Dampf in einer Menge zu bewirken, die proportional zur Verschiebung einer Stelle der letzteren manuellen Benutzerbetätigung von der ersten Stelle ist.

7. Elektronisches Dampfbereitstellungssystem gemäß Anspruch 1, wobei die manuelle Benutzerbetätigung Schieben umfasst und die Benutzereingabeeinheit einen Schiebeschalter (50) umfasst.

8. Elektronisches Dampfbereitstellungssystem gemäß Anspruch 7, wobei der Schiebeschalter ein Vorspannelement umfasst, das dazu ausgestaltet ist, seine Position in Richtung einer Position vorzuspannen, die einer Nullmenge der Dampferzeugung entspricht.

9. Elektronisches Dampfbereitstellungssystem gemäß Anspruch 2, wobei das System ferner eine Anzeigevorrichtung umfasst, die dazu ausgestaltet ist, dem Benutzer eine Angabe über die erzeugte Dampfmenge im Verhältnis zu einer aktuellen Betätigung der Benutzereingabeeinheit zu vermitteln.

10. Elektronisches Dampfbereitstellungssystem gemäß einem der vorhergehenden Ansprüche, wobei die Dampfmenge proportional zum Grad der manuellen Benutzerbetätigung gemäß einer monoton ansteigenden Funktion erzeugt wird, wobei die monoton ansteigende Funktion eines einer linearen Funktion, einer quadratischen Funktion, einer Polynomfunktion, einer Logarithmusfunktion und einer Exponentialfunktion umfasst.

11. Elektronisches Dampfbereitstellungssystem gemäß einem der vorhergehenden Ansprüche, wobei die Steuereinheit ferner dazu ausgestaltet ist, die Erzeugung von Dampf zu verhindern, wenn der durch die Benutzereingabeeinheit erkannte Grad der manuellen Benutzerbetätigung unter einem Schwellenwert (78) liegt.

12. Elektronisches Dampfbereitstellungssystem gemäß einem der vorhergehenden Ansprüche, das eine Aktivierungseinheit umfasst, die dazu ausgestaltet ist, eine Eingabe zu erfassen und als Reaktion darauf die Stromversorgung des Verdampfers vor der Steuerung der durch die Steuereinheit erzeugten Dampfmenge einzuleiten.

13. Elektronisches Dampfbereitstellungssystem gemäß Anspruch 12, wobei die Aktivierungseinheit dazu ausgestaltet ist, eine manuelle Eingabe zu erkennen.

14. Elektronisches Dampfbereitstellungssystem gemäß Anspruch 12, wobei die Aktivierungseinheit dazu ausgestaltet ist, eine Benutzerinhalation zu erkennen.

15. Elektronisches Dampfbereitstellungssystem gemäß einem der Ansprüche 1 bis 14, wobei der Verdampfer dazu ausgestaltet ist, aus einer Flüssigkeit Dampf zu erzeugen.

## Revendications

1. Système électronique de délivrance de vapeur (10) comprenant :
un vaporiseur (4, 6) pour produire de la vapeur à inhaler par un utilisateur du système électronique de délivrance de vapeur ;
une alimentation électrique (5) pour fournir de l'énergie au vaporiseur ;
une unité d'entrée utilisateur (40) pour détecter un actionnement manuel par l'utilisateur ; et
**caractérisé par** :
une unité de commande (28) configurée pour régler une quantité de vapeur générée par le vaporiseur en proportion d'un niveau d'actionnement manuel par l'utilisateur détecté par l'unité d'entrée utilisateur pendant la production de vapeur, de manière à ce qu'une augmentation dans l'actionnement donne une plus grande quantité de vapeur et qu'une diminution dans l'actionnement donne une plus petite quantité de vapeur et de manière à ce que la quantité de vapeur soit produite en fonction du niveau d'actionnement manuel au moment de l'actionnement.

2. Système électronique de délivrance de vapeur selon la revendication 1, dans lequel l'actionnement manuel par l'utilisateur consiste en une pression, et l'unité d'entrée utilisateur comporte un bouton mécanique (40) ou un bouton sensible à la pression (40).

3. Système électronique de délivrance de vapeur selon la revendication 1, dans lequel l'actionnement manuel par l'utilisateur consiste en un attouchement, et l'unité d'entrée utilisateur comporte une interface sensible à l'attouchement (45).

4. Système électronique de délivrance de vapeur selon la revendication 3, dans lequel l'interface sensible à l'attouchement est formatée comme une bande linéaire, une bande incurvée, une bande essentiellement plate, ou une bande s'étendant partiellement ou essentiellement autour du périmètre du système.

5. Système électronique de délivrance de vapeur selon la revendication 3 ou 4, dans lequel la quantité de vapeur est sélectionnée en fonction d'une position de l'actionnement manuel par l'utilisateur sur l'interface sensible à l'attouchement.

6. Système électronique de délivrance de vapeur selon la revendication 3 ou 4, dans lequel l'unité d'entrée utilisateur est configurée pour :
détecter un premier cas d'actionnement manuel par l'utilisateur à un premier emplacement sur l'interface sensible à l'attouchement pour entraîner la production de vapeur en une première quantité ; et
détecter ensuite un écart de l'actionnement manuel par l'utilisateur par rapport au premier emplacement pour entraîner la production de vapeur en une quantité proportionnelle au déplacement d'un emplacement du dernier actionnement manuel par l'utilisateur relativement au premier emplacement.

7. Système électronique de délivrance de vapeur selon la revendication 1, dans lequel l'actionnement manuel par l'utilisateur consiste en un coulissement, et l'unité d'entrée utilisateur comporte un commutateur coulissant (50) .

8. Système électronique de délivrance de vapeur selon la revendication 7, dans lequel le commutateur coulissant comporte un élément de sollicitation configuré pour solliciter sa position vers une position correspondant à un niveau nul de production de vapeur.

9. Système électronique de délivrance de vapeur selon la revendication 2, dans lequel le système comprend en outre un affichage configuré pour présenter à l'utilisateur une indication de la quantité de vapeur produite proportionnellement à un actionnement courant de l'unité d'entrée utilisateur.

10. Système électronique de délivrance de vapeur selon l'une quelconque des revendications précédentes, dans lequel la quantité de vapeur est produite proportionnellement au niveau d'actionnement manuel par l'utilisateur selon une fonction augmentant de façon monotonique, la fonction augmentant de façon monotonique consistant en soit une fonction linéaire, soit une fonction quadratique, soit une fonction polynomiale, soit une fonction logarithmique, soit une fonction exponentielle.

11. Système électronique de délivrance de vapeur selon l'une quelconque des revendications précédentes, dans lequel l'unité de commande est en outre configurée pour empêcher la production de vapeur lorsque le niveau d'actionnement manuel par l'utilisateur détecté par l'unité d'entrée utilisateur est inférieur à une valeur de seuil (78).

12. Système électronique de délivrance de vapeur selon l'une quelconque des revendications précédentes, et comprenant une unité d'activation configurée pour détecter une entrée et en réponse, initier l'alimentation en énergie du vaporiseur avant de régler la quantité de vapeur produite par l'unité de commande.

13. Système électronique de délivrance de vapeur selon la revendication 12, dans lequel l'unité d'activation est configurée pour détecter une entrée manuelle.

14. Système électronique de délivrance de vapeur selon la revendication 12, dans lequel l'unité d'activation est configurée pour détecter une inhalation par l'utilisateur.

15. Système électronique de délivrance de vapeur selon l'une quelconque des revendications 1 à 14, dans lequel le vaporiseur est configuré pour produire de la vapeur à partir d'un liquide.
